# EUROPEAN PATENT APPLICATION

(11) **EP 2 589 434 A1**
(43) Date of publication of application: **08.05.2013**
(21) Application number: 11187910.2
(22) Date of filing: 04.11.2011
(51) Int. Cl.: B01J 29/12, B01J 37/02, C10G 45/64

(54) **Process and catalysts for enhancing the fuel quality of hydrocarbon blends**

(71) Applicant: ENI S.p.A., 00144 Rome (IT)
(72) Inventor: Weitkamp, Jens, 72160 Horb (DE); Rabl, Sandra, 71032 Böblingen (DE); Ferrari, Marco Massimo, 20148 Milano (IT); Calemma, Vincenzo, 20097 San Donato Milanese (IT)
(74) Representative: Maiwald Patentanwalts GmbH

(57) **Abstract**

A process is described for enhancing the fuel quality of hydrotreated hydrocarbon blends, possibly dearomatized, through reaction with hydrogen, in the presence of a new catalytic composition comprising one or more metals selected from Pt, Pd, Ir and Rh, and a zeolite of the FAU type, containing one or more cations of metals Me selected from alkali metals, alkaline earth metals, and lanthanoids, and containing from 0.04 to 0.4 moles of hydrogen ions per mole of aluminium present in the crystalline lattice of the zeolite.

The process of the invention leads to an increase in the cetane number and a decrease in the density and T₉₅, with a high selectivity in the gas oil cut.

## Description

The present invention relates to a process for enhancing the quality as fuel of hydrotreated hydrocarbon blends, preferably having a boiling point ranging from 180 to 400°C, particularly gas oil from hydrocracking and LCO. The process allows high quality diesel fuel to be obtained, by the practically complete removal of total aromatic compounds, with a reduction in the content of multi-ring naphthenes, favouring the formation of paraffins and monocycle naphthenes, with a decrease in the density and T₉₅ and an increase in the cetane number. This type of modification in the composition of the blend produces a fuel with a reduced emission of particulate, as described, for example, in K. Nakakita, H. Ban, S. Takasu, Y. Hotta, K. Inagaki, W. Weissman, J. Farrell, SAE paper 2003-01-1914; K. Nakakita, K. Akihama, W. Weissman, J.T. Farrell, Int. J. Engine Res. 6 (2005) 187-205; I.P. Androulakis, M.D. Weisel, C.S. Hsu, K. Qian, L.A. Green, J.T. Farrell, K. Nakakita, Energy Fuels 19 (2005) 111-119.

The production of fuels to be used in new generation engines, having low emissions, is one of the main drivers for the development of innovative processes in the refinery industry. The definition of the future specifications of fuels is under continuous discussion, but there is no doubt that there is an evolution towards increasingly more restrictive regulations with respect to emissions, which will require products having substantially different characteristics from those of present products also from a compositional point of view.

In particular, as far as gas oil for motor vehicles is concerned, in addition to a reduction of the sulfur content, other parameters linked to the quality are: the content of condensed polyaromatic compounds, density, T₉₅ (distillation temperature of 95% of the product) and cetane number or index. The quality of the fuels is strictly linked to their compositional characteristics; with respect to density, the cetane number and particulate emissions, the most desirable components are, in the following order: paraffins >> naphthenes > aromatics. Polycondensed aromatic compounds are the least desirable, as, with the same number of carbon atoms, they have the lowest cetane number and the highest density; in addition, they are the precursors of particulates, increasing their emission in diesel engines. Most probably, not all of the above-mentioned characteristics will be the object of future regulations, in any case, however, a reduction in aromatic compounds, more specifically polynuclear aromatic compounds (PNA), is a highly desirable result, considering the direct impact they have on emissions (M.M. Rhead and S.A.Hardy Fuel 82 (2003) 385-393). In this respect, a stricter European directive has recently been issued with respect to the maximum content of polynuclear aromatic compounds, which will be further reduced from 11% to 8% (Directive 2009/30/EC of the European Parliament and of the Council, 23.04.2009, amending Directive 98/70/EC relating to the quality of petrol and diesel fuels, Official Journal of the European Communities, L140/88, 5.6.2009). From a general point of view, it would be desirable to obtain a reduction in the content of aromatic structures through their hydrogenation and subsequent hydrodecyclization, until isoparaffins and, above all, n-paraffins are obtained, compatibly with the cold properties: the most desirable components are therefore isoparaffins with a low branching degree. This would lead to a distinct change in the properties of diesel fuels such as:
- a decrease in the density;
- an increase in the cetane number;
- a reduction in emissions;
- a reduction in the boiling point with the same number of carbon atoms present in the molecule.

Processes currently commercially available for obtaining middle distillates with a reduced content of aromatic compounds are: dearomatization and hydrocracking. In the former case, the dearomatization of the feedstock essentially takes place by the hydrogenation of the aromatic structures with the formation of the corresponding naphthene structures. In this case there is:
- a reduction in the density;
- a reduction in the boiling point;
- a modest increase in the cetane number;
- a limited formation of products with a lower molecular weight with respect to the feedstock.

A simple reduction in aromatic compounds with cyclo-alkane structures preserves the yield to diesel but maintains undesired cyclic structures and does not significantly increase the cetane number (R. C. Santana, P. T. Do, M. S., W. E. Alvarez, J. D. Taylor, E. L. Sughrue and D. E. Resasco, Fuel 85 (2006) 643-656).

In the latter case, hydrocracking, the opening of the cycloalkane structures to paraffins is obtained, with significant increases in the cetane number, but with a significant production of light fractions and a consequent loss in the yield to middle distillate.

The necessity is therefore felt for an alternative process which, in addition to saturating the aromatic rings, causes the selective opening of the naphthene rings (Selective Ring Opening, SRO); this overall process therefore converts the aromatic systems, with either one or more condensed rings, into paraffins which boil within the distillation range of gas oil. For this purpose, it is necessary for the opening of the naphthene ring to take place by breakage of an endocyclic C-C bond, so that the final paraffinic product has the same number of carbon atoms as the starting naphthene. It is also desirable for the endocyclic C-C bonds which are broken to comprise those adjacent to the tertiary carbon atom(s), in order to form mainly linear paraffins and isoparaffins with a weak branching degree.

In this respect, US 5,763,731 describes the use of Ir together with an acid co-catalyst of the zeolitic type in order to favour the contraction of the rings with 6 carbon atoms to rings with 5 carbon atoms, as these more easily undergo a ring opening reaction. This acidity causes the excessive formation of light cracking products and highly branched paraffins, as a consequence of the skeletal isomerization reaction of the paraffins initially present and those formed as a result of the ring opening process.

In order to overcome this problem, US 2002/0050466 describes the use of a bimetallic Ir-Pt catalyst supported on Al₂O₃, whose content of each metal is lower than 2.0%, and preferably < 1.0%, regardless of the Ir/Pt ratio. Also in this case, the acidity is not optimized to obtain a mixture of products having a high cetane number; as a consequence it is necessary to mix these products with a gas oil having a cetane number of at least 40.

W02005/103207 describes the upgrading of distillates containing naphthene compounds, by the transformation of said compounds into the corresponding paraffinic derivatives, prevalently branched, which uses catalysts containing Pt, Pd, Ir, Rh, Ru and Re and an acid silico-aluminate selected from a suitable micro-mesoporous silico-alumina and an MTW zeolite.

W02007/006473 describes a process for improving the fuel quality of hydrotreated hydrocarbon blends by enrichment in alkylbenzene compounds, at least partly deriving from the conversion of the naphtheno-aromatic structures contained in said hydrotreated blends.

WO 2009/106324 describes a process for improving the fuel properties of suitable hydrocarbon blends, in terms of a decrease in density, an increase in the cetane number, a reduction in the emissions and lowering of the boiling point, with the same number of carbon atoms in the molecule, by eliminating the content of aromatic structures through their contemporaneous hydrogenation and hydrodecyclization, until a product containing prevalently n-paraffins, isoparaffins and monocyclic alkylnaphthenes is obtained. This process uses a particular catalyst containing a metal component, selected from Ir and a mixture of Ir with one or more metals selected from Pt, Pd, Ru, Rh and Re, and an acid component containing a particular silico-alumina.

In one publication K. Chandra Mouli, V. Sundaramurthy and A.K. Dalai, J. Mol. Catal. A: Chemical 304 (2009) 77-84 a process is described for the ring opening of decalin in the presence of catalysts containing Pt and Ir supported on zeolite Y or beta in a completely acidic form, i.e. in the form in which the negative charges present in the zeolite lattice due to the presence of aluminium in tetrahedral form, are all saturated by hydrogen ions. The completely acidic form of the zeolite is obtained from the corresponding ammonia form by calcination at 500°C. Ir and Pt are introduced by impregnation with aqueous solutions containing the precursors IrCl₃ and H₂[PtCl₆], followed by calcination in air, for 3 hours, at 500°C. In this case, the selectivity to paraffins, compounds with a high cetane number, is extremely low.

The Applicant has now found a catalytic composition capable of enhancing the fuel properties of suitable hydrocarbon blends, wherein these improvements relate to the density, T₉₅ and cetane number. By treating said blends with hydrogen in the presence of these new catalysts, high selectivities are obtained to products deriving from the ring opening of compounds containing one or more naphthene rings, wherein said compounds containing one or more naphthene rings are present in the hydrocarbon blends used or are formed during the treatment itself. The products obtained are mainly n-paraffins, isoparaffins and naphthenes containing only one ring, whereas parallel cracking reactions of both the alkyl chains linked to the naphthene rings, and the paraffins present in the feedstock and paraffins formed during the process itself, are extremely limited.

The particular catalytic composition used contains a zeolite of the FAU type, with a controlled acidity, in which calibrated quantities of one or more cations selected from alkali metal cations, alkaline earth metal cations and lanthanoid cations, are present.

The overall advantage deriving from the use of the catalytic system object of the invention, is the attainment, with very high yields, of a product which boils within the range of a gas oil cut, but which has a reduced density and an improved cetane number.

A first object of the present invention therefore relates to a process for enhancing the fuel properties of hydrotreated, and possibly dearomatized, hydrocarbon blends, by the reaction of said blends with hydrogen, in the presence of a catalytic composition comprising:
- one or more metals T selected from Pt, Pd, Ir and Rh,
- a zeolite of the FAU type, having a crystalline lattice composed of silica and alumina, wherein the negative charges present in the crystalline lattice are neutralized by one or more cations of metals Me selected from alkali metal cations, alkaline earth metal cations and lanthanoid cations, and by x moles of hydrogen ions per mole of aluminium, wherein x ranges from 0.04 to 0.4.

The total quantity of metal cations and hydrogen ions present in the zeolite structure is such as to saturate the negative charges formed in the crystalline lattice of the zeolite, due to the presence of aluminium in tetrahedral coordination.

The Si/Al molar ratio in the crystal lattice of the FAU-type zeolite used, preferably ranges from 1 to 10, more preferably from 1 to 3.

The x value preferably ranges from 0.1 to 0.2.

In particular, an object of the present invention relates to a process for enhancing the fuel properties of hydrotreated, and possibly dearomatized, hydrocarbon blends, through reaction with hydrogen, in the presence of a catalytic composition comprising:
- one or more metals T selected from Pt, Pd, Ir and Rh,
- a zeolite of the FAU type having a crystalline lattice composed of silica and alumina, with a molar ratio Si/Al ranging from 1 to 10, wherein the negative charges present in the crystalline lattice are neutralized by x moles of hydrogen ion per mole of aluminium, wherein x ranges from 0.04 to 0.40, and one or more cations of metals Me selected from alkaline, alkaline-earth metals and lanthanoids, wherein the sum of the products of the moles of each metallic cation Me times the valence of said metallic cation is equal to (1-x).
If only one cation of metal Me is present, said sum will correspond to the sole product of the moles of said cation times its valence.

According to a preferred aspect, the catalytic composition comprises a FAU-type zeolite, wherein the negative charges present on the crystalline lattice are neutralized by a cation of a metal Me selected from alkali metals, alkaline earth metals and lanthanoids and by x moles of hydrogen ions per mole of aluminium, wherein x ranges from 0.04 to 0.4. A particular object of the present invention therefore relates to a process for enhancing the fuel properties of hydrotreated hydrocarbon blends, possibly dearomatized, by reaction of said blends with hydrogen, in the presence of a catalytic composition comprising:
- one or more metals T selected from Pt, Pd, Ir and Rh,
- a FAU-type zeolite having the molar formula (A):

   **(1-x)/n Me. x H. AlO₂. y SiO₂** **(A)**
wherein Me is a cation of a metal selected from alkali metals, alkaline earth metals and lanthanoids,
H is a hydrogen ion,
y ranges from 1 to 10,
x corresponds to the moles of hydrogen ions and ranges from 0.04 to 0.4,
n is the valence of the cation Me.

Alkali metals, alkaline earth metals and lanthanoid metals which can be suitably used are Li, Na, K, Be, Mg, Ca, Sr, Ba, La and mixtures thereof. Na, Li, lanthanum and mixtures of lanthanoids are preferably used.

Pt or Ir are preferably used as metal T.

All FAU-type zeolites can be conveniently used in the catalytic composition of the present invention, preferably zeolite X and zeolite Y are used, and even more preferably zeolite Y is used.

The hydroconversion process of the present invention allows a substantial increase in the cetane number to be obtained, a decrease in the density and T₉₅ of the blends thus treated. The product obtained proves to be highly enriched in paraffin and alkylnaphthene compounds with only one ring.

According to a particularly preferred aspect the hydrotreated hydrocarbon blends are subjected to dearomatization before being treated according to the process of the present invention.

The particular catalytic composition selected allows the characteristics of the hydrotreated hydrocarbon cuts to be considerably improved by the saturation of the aromatic rings with naphthene structures, immediately followed by the selective opening of part or all of the naphthene rings in the corresponding aliphatic chains, with the least possible formation of low-molecular-weight products; in this way the maximum improvement in terms of density, boiling point and cetane number is obtained.

The catalytic compositions used in the present invention are also extremely stable with time and can be used, if desired, at high temperatures, maintaining an absolutely modest cracking activity.

In the catalytic composition used in the process of the present invention, the metal component T is preferably in a quantity ranging from 0.7 to 5% by weight, even more preferably from 2 to 4% by weight, with respect to the catalytic composition.

The weight percentage of the metal refers to the element content expressed as metal element; in the catalytic composition, after calcination, said elements are in the form of oxides; in the final catalytic composition, after reduction, they are in the form of metal element.

FAU-type zeolites are described, for example, in C. Baerlocher, L.B. McCusker, D.H. Olson, Atlas of Zeolite Framework Types, 6th Edn., Elsevier, Amsterdam, 2007, p. 140-141. The molar ratio Si/Al in the crystalline lattice of the FAU-type zeolite used in the process of the present invention preferably ranges from 1 to 10, more preferably from 1 to 3.

Zeolite X and its preparation are described, for example, in US 2882244 and D.H. Olson, J.Phys. Chem. 74 (1970) 2758-2764.

Zeolite Y and its preparation are described, for example, in US 3,130,007 and in M.L.Costenoble, W.J. Mortier, J.B. Uytterhoeven, J. Chem. Soc., Faraday Trans. I, 72 (1976) 1877-1883.

The highest values for the Si/Al ratio in the crystalline lattice of the FAU zeolite, in particular values higher than 3 and lower than or equal to 10, are obtained with post-synthesis dealumination treatment. Dealumination treatment is well-known to experts in the field and can be effected, for example, by treatment with strong acids, thermal treatment, hydrothermal treatment, substitution of aluminium with silicon. The dealumination treatment indicated above and which can be conveniently used for preparing FAU-type zeolites with a Si/A ratio higher than 3, is described, for example, in G. H. Kühl, Catalysis and zeolites- Fundamental and Applications (eds J. Weitkamp and L. Puppe), Springer, pages 81-197, 1999.

The catalytic compositions of the present invention are prepared starting from FAU zeolites completely in the sodium form (Na-FAU) or from a FAU zeolite obtained from the zeolite in the sodium form (Na-FAU) by partial exchange with ammonium ions, called Na,NH₄-FAU.

In particular, zeolite Na-X can be prepared, for example, as described in US 2,882,244. Zeolite Na-X is a zeolite completely in the sodium form, i.e. a zeolite X in which the negative charges present in the crystal lattice of the zeolite, due to the aluminium in tetrahedrical coordination, are completely neutralized by sodium ions.

Na-Y zeolite can be prepared, for example, as described in US 3,130,007. Na-Y zeolite is completely in the sodium form, i.e. a Y zeolite in which the negative charges present in the crystalline lattice of the zeolite are completely neutralized by sodium ions.

Na-Y zeolite can be prepared, for example, as described in US 3,130,007. Na-Y zeolite is a zeolite in completely sodium form, i.e. a Y zeolite in which the negative charges present in the crystalline lattice of the zeolite are completely neutralized by sodium ions.

A treatment with an aqueous solution of NaNO₃ can be useful for purifying the Na-FAU zeolite from possible traces of impurities, before its use.

After possible treatment with NaNO₃, the Na-FAU zeolite can be subjected to ion exchange to obtain the corresponding zeolite Na,NH₄-FAU, i.e. a zeolite in which the negative charges present in the crystalline lattice are neutralized by sodium and NH₄⁺ ions.

This ion exchange can be effected, for example, by means of a suspension in aqueous solution of an ammonium salt. The ammonium salt can be selected, for example, from NH₄NO₃, NH₄C1 or NH₄CH₃C00. The solution used contains ammonium ions in a concentration which can range from 0.001 to 0.1 moles/I. The exchange is preferably effected by suspending the Na-FAU zeolite in the aqueous solution of the salt and maintaining the solution under stirring at a temperature preferably ranging from 60 to 90°C, for a time preferably ranging from 3 to 5 hours.

The Na-FAU zeolite and the zeolite obtained therefrom by exchange with ammonium ions, indicated with Na,NH₄-FAU, can both be used for preparing the catalytic composition of the present invention wherein the metal Me is sodium.

In particular Na-FAU zeolite is preferably used for preparing catalytic compositions containing smaller quantities of H ions with respect to the molar range 0.04-0.40, even more preferably compositions having values of x varying from 0.04 4 to 0.2; Na, NH₄-FAU zeolites are preferably used for preparing catalytic compositions containing higher quantities of H ions with respect to the molar range 0.04-0.40, even more preferably compositions having values of x higher than 0.2 and smaller or equal to 0.4.

All the other zeolites containing the metals Me, other than Na, are prepared, in accordance with the invention, from Na-FAU zeolite. In particular zeolites containing one or more metals selected from alkali metals other than Na, alkaline earth metals and lanthanoids are prepared from Na-FAU zeolite by ion exchange, using one or more compounds of one or more metals Me, wherein Me is selected from alkali metals other than sodium, alkaline earth metals and lanthanoids.

The Na-FAU zeolite can be also subjected to a partial ion exchange, using one or more compounds of one or more metals Me wherein Me is selected from alkali metals other than sodium, alkaline earth metals and lanthanoids: only part of the Na ions are exchanged with Me ions, and the resulting zeolites will contain the remaining sodium ions and one or more cations of metal Me, wherein Me is one or more metals selected from alkali metals other than sodium, alkaline earth metals and lanthanoids.

In order to effect the total or partial ion exchange, the Na-FAU zeolite is suspended in deionized water and an aqueous solution of one or more sources of one or more metals Me is added to the suspension, wherein Me is selected from alkali metals other than sodium, alkaline earth metals and lanthanoids. Sources which can be conveniently used are salts soluble in aqueous solution, for example the corresponding chlorides or nitrates. In the case of lanthanoids, nitrates, for example, can be suitably used.

The quantity of metal Me used in the ion exchange is selected on the basis of the exchange percentage to be reached: all known exchange techniques can be used and a skilled person is capable of obtaining the desired exchange degree. Exchange techniques are described for example in R.P. Townsend, Stud. Surf. Sci. Catal. 58 (1991) 359-390.

After the total or partial ion exchange, the sodium is separated, washed with water, dried at a temperature ranging from 60 to 80°C. The zeolites thus obtained are preferably used for preparing catalytic compositions containing smaller quantities of H ions relating to the molar range x = 0.04-0.4, even more preferably compositions having values of x ranging from 0.04 to 0.2.

The zeolites resulting from the ion exchange, either partial or total, can be subsequently subjected to a partial ion exchange with ammonium ions, for example by suspension in an aqueous solution of an ammonium salt. The ammonium salt can be selected for example from NH₄NO₃, NH₄Cl, NH₄CH₃COO. The solution used contains ammonium ions in a concentration which can vary from 0.001 to 0.1 moles/I. The exchange is preferably effected by suspending the zeolite in the aqueous solution of the salt, and maintaining the suspension under stirring at a temperature preferably ranging from 60 to 90°C, for a time preferably ranging from 3 to 5 hours.

The zeolite thus obtained is a zeolite in which the negative charges present in the crystalline lattice are neutralized by Me ions and NH₄⁺ ions, wherein Me is one or more metals selected from alkali metals, alkaline earth metals and lanthanoids, and possibly sodium ions, if the previous ion exchange effected on the Na-FAU zeolite with the metal Me was a partial ion exchange; these zeolites, containing one or more metallic cations and also NH₄⁺, are preferably used for preparing catalytic compositions containing the highest quantities of H ions relating to the molar range 0.04-0.4, even more preferably compositions having values of x higher than 0.2 and lower than or equal to 0.4.

The metal or metals T are introduced into the catalytic composition by any of the known techniques, such as ion exchange or impregnation.

According to the impregnation technique, the zeolite is wet with an aqueous solution of a compound of a metal T, wherein said zeolite is a zeolite deriving from the preparations described above, containing one or more cations Me selected from alkali metals, alkaline earth metals, lanthanoids and mixtures thereof (Me-FAU), possibly partially exchanged with NH₄⁺ ions (Me, NH₄-FAU).

Sources of metal T which can be conveniently used are, for example, H₂ [IrCl₆], (NH₄)₂ [IrCl₆], [CH₃COCH=C(O⁻)CH₃]₃Ir, [Ir(NH₃)₅Cl]Cl₂, H₂[PtCl₆], [pt(NH₃)₄] (OH)₂, Pt(NH₃)₄]Cl₂, [Pd(NH₃)₄] (OH)₂, PdCl₂, RhCl₃, [Rh(NH₃)₅Cl]Cl₂.

The operating temperature ranges from 60 to 90°C, at a pH ranging from 1 to 6. The resulting product is dried, preferably in air, at room temperature, and is calcined in an oxidizing atmosphere preferably at a temperature ranging from 200 to 600°C, for a time ranging from 3 to 5 hours. According to a preferred aspect, a heating rate of 0.5°C/min is used, with an air flow ranging from 30 to 100 1/hour.

When the catalytic composition comprises more than one metal T, the impregnation is carried out with the co-impregnation technique: the Me-FAU zeolite, or zeolite Me,NH₄-FAU, is wet with the pre-mixed aqueous solutions of compounds of the metals T. The resulting product is dried at a temperature ranging from 60 to 90°C and is then calcined in an oxidizing atmosphere at a temperature ranging from 200 to 600°C.

According to the ion exchange technique, the zeolite is suspended in deionized water and an aqueous solution of a source of metal T is added to the suspension, wherein said zeolite is a zeolite, according to the preparations described above, containing one or more cations Me selected from alkali metals, alkaline earth metals, lanthanoids (Me-FAU), possibly partially exchanged with NH₄⁺ (Me, NH₄-FAU) ions.

Sources of metal T which can be conveniently used are the same as those indicated above for the impregnation technique.

In particular, the zeolite can be suspended in an aqueous solution of a complex or salt of one or more metals T, operating at room temperature and at a pH of 6 to 10. After the ion exchange, the solid is separated, washed with water, dried at a temperature ranging from 60 to 90°C, and finally thermally treated in an inert or oxidizing atmosphere. Temperatures which can be used for the purpose are those ranging from 200 to 600°C, for a time of 3 to 5 hours. According to a preferred aspect, a heating rate of 0.5°C/min is used, with an air flow ranging from 30 to 100 1/hour. The compositions thus obtained correspond to the oxidized form of the catalytic composition. Said compositions in oxidized form contain one or more metals T in the form of an oxide, one or more metals Me selected from alkali metals, alkaline earth metals and lanthanoids, and possibly H⁺ ions in a quantity lower than 0.4 moles per mole of aluminium, formed, during calcination, from the decomposition of NH₄⁺ ions possibly present in the composition.

Said compositions can be extruded, with traditional binders, such as for example aluminium oxide, boehmite or pseudo-boehmite. The extruded product can be prepared according to the techniques well-known to experts in the field. The precursor and binder can be pre-mixed in weight ratios ranging from 30:70 to 90:10, preferably from 50:50 to 70:30. At the end of the mixing, the product obtained is consolidated into the desired final form, for example in the form of extruded pellets or tablets.

The compositions described above, possibly in bound form, are transformed into the catalytic compositions used in the process of the present invention by means of activation, wherein said activation corresponds to a reduction treatment, preferably preceded by drying. The drying is effected in an inert atmosphere at temperatures ranging from 25 to 100°C, whereas the reduction is obtained by thermal treatment of the catalyst in a reducing atmosphere (H₂) at a temperature ranging from 300 to 450°C, and a pressure preferably ranging from 0.1 to 5.2 MPa.

The compositions with a low density of acid sites, and therefore containing a low quantity of H⁺ ions, are formed from catalytic compositions containing one or more metals Me and one or more metals T: the H⁺ ions present in the final catalytic composition derive from the reduction with H₂ of the oxides of the metals T, in turn formed during the calcination step which follows the introduction of the metals T (from J.Weitkamp, Solid State Ionics, 131 (2000) 175-188).

The compositions with a higher density of acid sites, and therefore containing a higher quantity of H⁺ ions, are obtained from catalytic compositions containing, in addition to one or more metals Me and one or more metals T, also NH₄⁺ ions: during the calcination, which follows the introduction of the metal T, the formation takes place of the oxide of the metal T and the thermal decomposition of the NH₄⁺ ions to give H⁺ ions, and during the subsequent reduction step, further H⁺ ions are generated by the reduction with H₂ of the oxide of the metal T.

The catalytic compositions used in the present invention and the compositions from which they derive by reduction, during the activation step, are new and are a further object of the present invention.

The hydrotreated hydrocarbon blends which can be subjected to the process of the present invention are blends having boiling points within the range of 150 to 450°C, preferably from 180 to 400°C, even more preferably from 220 to 400°C. Blends having boiling points within the range of 220 to 360°C are particularly preferred.

In particular, hydrocarbon cuts obtained by the hydrotreatment of oil cuts can be conveniently used, wherein said oil cuts can be selected, for example, from Gas oil from thermal cracking (TCGO), gas oil from visbreaking (VISGO), gas oil from coking (COGO), or mixtures thereof, jet fuel, light cycle oil (LCO), heavy vacuum gasoil (HVGO), the cut 420⁻ of heavy cycle oil (HCO), or hydrocarbon cuts obtained by the hydrotreatment of cuts of a petrochemical origin, such as, for example, FOK (fuel oil cracking), can be conveniently used. Other feedstocks which can be fed are hydrotreated products of oil cuts such as, for example, oil sands, shale oil, coal-derived oils. A particularly preferred aspect of the present invention is to use hydrotreated gas oil as hydrocarbon blend, preferably deriving from Thermal Cracking, or hydrotreated Light Cycle Oil.

Hydrotreatment is a process which is well-known to experts in the field and is described, for example, in

Catalysis - Science and Technology, R. Anderson, M. Boudart (Eds.), Vol. 11, Springer-Verlag, (1996) p. 1-310. It can be effected in one or more fixed bed reactors, and the catalytic beds can contain the same or different catalysts. Catalysts based on metallic compounds of Group VI, and/or Group VIII, are usually used, on a carrier, preferably amorphous, such as, for example, alumina or silica-alumina. Metals which can be well used are, for example, nickel, cobalt, molybdenum and tungsten. Examples of suitable catalysts and their preparation are described in J. Scherzer, A.J. Gruia, Hydrocracking Science and Technology, Marcel Dekker, 1996.

The hydrotreatment catalysts are used in sulfided form. The sulfidation can be obtained, for example, by sending a suitable charge onto the catalyst, containing a sulfur compound such as dimethyldisulfide (DMDS), dimethylsulfoxide (DMSO) or other compounds which, upon decomposing, lead to the formation of H₂S.

The hydrotreatment is preferably carried out at a temperature ranging from 200°C to 400°C. The pressure normally ranges from 2 to 10 MPa, depending on the catalyst used, an expert in the field can easily identify the best conditions for the catalyst selected. During the hydrotreatment, the heteroatoms N and S are eliminated and the feedstock also undergoes saturation reactions of the aromatic rings with a reduction in the content of aromatic carbon and an enrichment in naphtheno-aromatic compounds which are particularly suitable for being treated according to the process of the present invention to give mainly paraffins and naphthenes with only one ring.

According to a particularly preferred aspect of the present invention, the hydrotreated hydrocarbon blends are subjected to dearomatization before being fed to the process.

During this dearomatization treatment, the hydrotreated hydrocarbon blend is reacted with hydrogen in the presence of a catalyst consisting of noble metals supported on SiO₂ or Al₂O₃, at a temperature ranging from 200 to 300°C and a pressure ranging from 2 to 6 MPa. It is preferable to operate at a WSHV ranging from 0.5 to 3 hours⁻¹. The ratio between hydrogen and feedstock (H₂/HC) preferably ranges from 600 to 1,000 Nl/kg.

The process of the present invention which allows an increase in the cetane number, a decrease in the density and T₉₅ of hydrotreated, and possibly dearomatized, hydrocarbon blends, is preferably carried out at a temperature ranging from 240 to 380°C, even more preferably from 280 to 360°C, at a pressure ranging from 3 to 10 MPa. Even more preferably, the pressure is higher than 5 MPa and lower than 10 MPa, even more preferably higher than 5 and lower than 8 MPa. The WHSV can range from 1 to 3 hours⁻¹ and a ratio between hydrogen and feedstock (H₂/HC) ranging from 400 to 3,000 Nl/kg can be used.

The following examples are provided for a better illustration of the invention claimed herein without limiting its objectives in any way.

### Example 1 - Preparation of 4.0Pt/Na_{0.88},H_{0.12}-Y

A sample of zeolite completely in the sodium form Na-Y (Strem Chemicals, lot No. 148 960), having an Si/Al molar ratio of 2.41, is treated twice with an aqueous solution of NaNO₃. The treatment is effected by suspending the zeolite in an aqueous solution of NaNO₃ 1 M and maintaining the suspension under stirring for 4 hours at 80°C. After filtration, the zeolite is washed with deionized water and dried at 80°C for 12 hours in an air oven.

13.7 g of the Na-Y zeolite thus obtained are suspended in 250 g of deionized water; an aqueous solution of 0.987 g of [Pt(NH₃)₄]Cl₂ (Chempur, 55.63% Pt) in 100 g of demineralized water is slowly added, over a period of 15 minutes, by means of a dropping funnel, under vigorous stirring. At the end, the stirring is prolonged for a further 2 hours at 80°C. The resulting solid is then subjected to filtration, washed with deionized water and dried at 80°C for 12 hours, in an air oven. The solid obtained is subsequently calcined in air at 300°C for 3 hours in an oven having a heating rate of 0.5°C/min and with an air flow of 58 1/hour. The dispersion of the platinum, determined with hydrogen in a Quantachrome apparatus, proves to be 56.6%. The composition thus obtained is in the form prior to the reduction treatment, i.e. in oxidized form. Said composition is then subjected to reduction under H₂, at a pressure of 5.2 MPa, by heating from room temperature to 350°C with a rate of 2 °C/min and maintaining the temperature at 350°C for 2 hours.

The catalytic composition thus obtained is in the final reduced form and contains platinum in a quantity equal to 4.0% by weight with respect to the weight of the composition.

In the final composition, the zeolite has the following formula:

0.88 Na . 0.12 H . AlO₂ . 2.41 SiO₂

The H⁺ cations are in a quantity equal to 12% in moles of the total cations contained in the crystalline structure of the zeolite, corresponding to a value of x, in formula (A), of 0.12.

The sodium ions are in a quantity equal to 88% in moles with respect to the total cations, corresponding to a value of (1-x)/n wherein n is the valence of sodium, in general formula (A), of 0.88.

### Example 2 - Preparation of 3.1 Ir/Na_{0.90},H_{0.10}-Y

A sample of zeolite completely in the sodium form Na-Y (Strem Chemicals, lot No. 148 960), having an Si/Al molar ratio of 2.41, is treated twice with an aqueous solution of NaNO₃. The treatment is effected by suspending the zeolite in an aqueous solution of NaNO₃ 1 M and maintaining the suspension under stirring for 4 hours at 80°C. After filtration, the zeolite is washed with deionized water and dried at 80°C for 12 hours in an air oven.

13.7 g of the Na-Y zeolite thus obtained are suspended in 250 g of deionized water; an aqueous solution of 0.983 g of [Ir(NH₃)₅Cl]Cl₂ (Colonial Metals, 49.86 % Ir) in 100 g of demineralized water is slowly added, over a period of 15 minutes, by means of a dropping funnel, under vigorous stirring. At the end, the stirring is prolonged for a further 4 hours at 80°C. The resulting solid is then subjected to filtration, washed with deionized water and dried at 80°C for 21 hours, in an air oven. The solid obtained is subsequently calcined in air at 300°C for 3 hours in an oven having a heating rate of 0.5°C/min and with an air flow of 58 1/hour. The composition thus obtained is in the form prior to the reduction treatment, i.e. in oxidized form. The catalytic composition in oxidized form is then subjected to reduction under H₂, at a pressure of 5.2 MPa, by heating from room temperature to 350°C with a rate of 2 °C/min and maintaining the temperature at 350°C for 2 hours.

The catalytic composition thus obtained is in the final reduced form and contains iridium in a quantity equal to 3.1% by weight with respect to the weight of the composition.

In the final composition, the zeolite has the following formula:

0.90 Na . 0.10 H . AlO₂ . 2.41 SiO₂

The H⁺ cations are in a quantity equal to 10% in moles of the total cations contained in the crystalline structure of the zeolite, corresponding to a value of x, in general formula (A), of 0.10.

The sodium ions are in a quantity equal to 90% in moles with respect to the total cations, corresponding to a value of (1-x)/n wherein n is the valence of sodium, in general formula (A), of 0.90.

### Example 3 - Preparation of 3.8 Ir/Na_{0.90},H_{0.10}-Y

A sample of zeolite completely in the sodium form Na-Y (Strem Chemicals, lot No. 148 960), having an Si/Al molar ratio of 2.41, is treated twice with an aqueous solution of NaNO₃. The treatment is effected by suspending the zeolite in an aqueous solution of NaNO₃ 1 M and maintaining the suspension under stirring for 4 hours at 80°C. After filtration, the zeolite is washed with deionized water and dried at 80°C for 12 hours in an air oven.

5.0 g of the Na-Y zeolite thus obtained are suspended in 75 g of deionized water; an aqueous solution of 0.478 g of [Ir(NH₃)₅Cl]Cl₂ (Colonial Metals, 49.86 % Ir) in 50 g of demineralized water is slowly added, over a period of 20 minutes, by means of a dropping funnel, under vigorous stirring. At the end, the stirring is prolonged for a further 4.5 hours at 80°C. The resulting solid is then subjected to filtration, washed with deionized water and dried at 80°C for 10 hours, in an air oven. The solid obtained is subsequently calcined in air at 300°C for 3 hours in an oven having a heating rate of 0.5°C/min and with an air flow of 58 1/hour. The composition thus obtained is in the form prior to the reduction treatment, i.e. in oxidized form.

The catalytic composition in oxidized form is then subjected to reduction under H₂, at a pressure of 5.2 MPa, by heating from room temperature to 350°C with a rate of 2 °C/min and maintaining the temperature at 350°C for 2 hours.

The catalytic composition thus obtained is in the final reduced form and contains iridium in a quantity equal to 3.8% by weight with respect to the weight of the composition.

In the final composition, the zeolite has the following formula:

0.90 Na . 0.10 H . AlO₂ . 2.41 SiO₂

The H⁺ cations are in a quantity equal to 10% in moles of the total cations contained in the crystalline structure of the zeolite, corresponding to a value of x, in general formula (A), of 0.10.

The sodium ions are in a quantity equal to 90% in moles with respect to the total cations, corresponding to a value of (1-x)/n wherein n is the valence of sodium, in general formula (A), of 0.90.

### Example 4 - Preparation of 0.94 Ir/Na_{0.41}, La_{0.16}, H_{0.11}-X

A sample of 10 g of zeolite X, completely in the sodium form (Na-X, having an Si/Al molar ratio of 1.21), is treated twice with an aqueous solution of NaNO₃. The treatment is effected by suspending the zeolite in an aqueous solution of NaNO₃ 1 M and maintaining the suspension under stirring for 4 hours at 80°C. After filtration, the zeolite is washed with deionized water and dried at 80°C for 12 hours in an air oven. The zeolite is mixed under stirring for 2 hours at 80°C, with 210 grams of an aqueous solution 0.05 M of La(NO₃)₃. After filtration, the zeolite is washed with deionized water and dried at 80°C for 12 hours in an air oven. The sample was calcined in air by heating from room temperature to 120 °C with a heating rate of 0.5 K·min⁻¹ and held at this temperature for 2 h in an oven under an air flow of 14.5 cm³·min⁻¹ and a nitrogen flow of 14.5 cm³·min⁻¹. Subsequently, the sample was heated to 200 °C with the above-mentioned heating rate and kept at this temperature for 2 h. The sample was then heated to 450 °C with the same heating rate, and the end temperature was kept for 2 h.

7.5 g of the zeolite La,Na-X thus obtained are suspended in 120 g of deionized water; an aqueous solution of 0.164 g of [Ir(NH₃)₅Cl]Cl₂ (Colonial Metals, 49.86 % Ir) in 100 g of demineralized water is slowly added, over a period of 15 minutes, by means of a dropping funnel, under vigorous stirring. At the end, the stirring is prolonged for a further 2 hours at 80°C. The resulting solid is then subjected to filtration, washed with deionized water and dried at 80°C for 12 hours, in an air oven. The solid obtained is subsequently calcined in air at 300°C for 2 hours in an oven having a heating rate of 0.5°C/min and with an air flow of 58 1/hour. The composition thus obtained is in the form prior to the reduction treatment, i.e. in oxidized form.

The composition in oxidized form is then subjected to reduction under H₂, at a pressure of 5.2 MPa, by heating from room temperature to 350°C with a rate of 2 °C/min and maintaining the temperature at 350°C for 2 hours.

The catalytic composition thus obtained is in the final reduced form and contains iridium in a quantity equal to 0.94% by weight with respect to the weight of the composition.

In the final composition, the zeolite has the following formula:

0.41 Na . 0.16 La . 0.11 H . AlO₂ . 1.21 SiO₂

The H⁺ cations are in a quantity equal to 11% in moles of the total cations contained in the crystalline structure of the zeolite, corresponding to a value of x of 0.11.

The sum of the Na moles, multiplied by the valence of sodium, and La moles, multiplied by the valence of La, equal to 0.41 +(0.16 x 3), corresponds to the value (1-x).

### Example 5 (comparative)

### Preparation of 0.5Pt/Na_{0.33},H_{0.67}-Y

A sample of 10 g of zeolite completely in the sodium form Na-Y (Strem Chemicals, lot No. 148 960), having an Si/Al molar ratio of 2.41, is suspended in 2.88 g of NH₄NO₃ and 615 g of deionized water. The ion exchange is maintained under stirring for 4 hours at 80°C. After filtration, the zeolite is washed with deionized water and dried at 80°C for 12 hours in an air oven. This ion exchange procedure is repeated twice.

7.5 g of the Na-Y zeolite thus obtained are suspended in 99 g of deionized water; an aqueous solution of 0.068 g of [Pt(NH₃)₄]Cl₂ (Chempur, 55.63 % Pt) in 50 g of demineralized water is slowly added, over a period of 10 minutes, by means of a dropping funnel, under vigorous stirring. At the end, the stirring is prolonged for a further 2 hours at 80°C. The resulting solid is then subjected to filtration, washed with deionized water and dried at 80°C for 12 hours, in an air oven. The solid obtained is subsequently calcined in air at 300°C for 2 hours in an oven having a heating rate of 0.5°C/min and with an air flow of 58 1/hour. The composition thus obtained is in the form prior to the reduction treatment, i.e. in oxidized form. Said composition is then subjected to reduction under H₂, at a pressure of 5.2 MPa, by heating from room temperature to 350°C with a rate of 2 °C/min and maintaining the temperature at 350°C for 2 hours.

The catalytic composition thus obtained is in the final reduced form and contains platinum in a quantity equal to 0.5% by weight with respect to the weight of the composition.

In the final composition, the zeolite has the following formula:

0.33 Na . 0.67 H . AlO₂ . 2.41 SiO₂

The H⁺ cations are in a quantity equal to 67% in moles of the total cations contained in the crystalline structure of the zeolite, corresponding to a value of x, in general formula (A), of 0.67, outside the H ion mole range of 0.04-0.4 which characterizes the catalytic compositions of the present invention.

The content of sodium ions is in a quantity equal to 33% in moles with respect to the total cations, corresponding to a value of (1-x)/n, in general formula (A), of 0.33.

### Example 6 - Catalytic test on cis-decalin

A continuous high-pressure laboratory plant is used. It mainly consists of a saturator for mixing H₂ with cis-decalin, a fixed bed reactor and a heated sampling valve, connected with a gaschromatograph. All parts downstream of the saturator are maintained at a sufficiently high temperature for preventing the condensation of the hydrocarbon vapours. The pressure of the hydrogen, coming from a cylinder, is reduced to the desired value before being introduced into the reactor; with the use of a three-way valve, the hydrogen flow can be directed to either the saturator or to the reactor. The saturator contains a fixed bed of an inert solid (chromosorb) impregnated with liquid cis-decalin. The gaseous mixture (H₂ and cis-decalin) enters the reactor from the bottom preheated to the reaction temperature and flows upwards in a specific duct. When it reaches the top, the direction of the flow changes and it passes over the catalytic bed. At the outlet of the reactor, the flow of gaseous products passes through a 6-way sampling valve heated and connected to the gaschromatograph. The gas leaving this valve is deviated to a container cooled to -10°C to separate the liquid fraction at this temperature. The entire quantitative evaluation is based on the analyses of the gaseous samples which go to the gaschromatograph.

The catalysts prepared according to Examples 1, 2, 3 and 4, according to the invention, and according to comparative Example 5, are tested in the equipment described above.

Cis-decalin was used as substrate (purity 99.75% by weight; impurities: trans-decalin 0.21% by weight). A quantity of catalyst equal to 0.21 grams are charged into the reactor.

The catalysts are introduced into the reactor in their oxidized form and their reduction is then effected in the same reactor as follows:
1) heating from room temperature to 350°C with an increase of 2°C/min in a hydrogen flow;
2) the temperature is kept constant at 350°C for 2 hours in a hydrogen flow, it is then brought to the temperature of the test.

During the activation, the pressure in the reactor is maintained at 5.2 MPa.

The results of the hydroconversion process of the cis-decalin charge with the catalysts according to the invention (examples 1, 2, 3 and 4) and comparative example 5, are indicated in the following Table 1, which refers to the following conditions:
P = 5.2 MPa
T = 280 °C
WHSV = 0.54h⁻¹

The columns of Table 1 indicate:
- the conversion of decalin (Conv. decalin (%)), expressed as a ratio between:
   - the difference in moles of decalin at the inlet and outlet of the reactor, and
   - the moles of decalin at the inlet.
- the selectivity to paraffins (Sel. paraffins (%)) expressed as a ratio between:
   - the difference in moles of paraffin at the outlet and inlet of the reactor, and
   - the difference in moles of decalin at the inlet and outlet of the reactor.
- the yield to paraffins (Yield paraffins (%)) corresponding to the product between Sel. paraffins (%) and Conv. decalin (%), divided by 100;
- the selectivity to products with less than 10 carbon atoms (Sel. C9-) corresponding to cracking reactions of cis-decalin:

**Table 1**

| Ex. | Catalyst | Conv. decalin | Sel. | Yield | Sel. |
|---|---|---|---|---|---|
| | | (%) | Paraffins (%) | paraffins (%) | C9- (%) |
| 5 | 0.5 Pt/ | 40 | 0 | 0 | 15 |
| | Na_{0 33}-H_{0 67}-Y | | | | |
| 2 | 3.1Ir/ | 55 | 18 | 9.9 | 15 |
| | Na_{0 90}-H_{0 10}-Y | | | | |
| 3 | 3.8Ir/ | 84 | 28 | 23.5 | 42 |
| | Na_{0 90}-H_{0 10}-Y | | | | |
| 1 | 4.0Pt/ | 12 | 18 | 2.16 | 2 |
| | Na_{0.88}-H_{0.12}-Y | | | | |
| 4 | 0.9Ir/ | 30 | 13 | 3.9 | 5 |
| | Na_{0.41}-La_{0.16}-H0₁₁-X | | | | |

The catalysts of Examples 1, 2, 3 and 4, relating to the invention, provide much higher selectivities to paraffins, within a wide conversion range of decalin (12-84%), therefore reaching higher yields than those obtained with the comparative catalyst 5.

The use of the catalyst prepared according to Example 1, even if it provides lower yields under the conditions of the example, allows less gas oil to be lost in the process, due to the reduced formation of cracking products.

### Example 7 - catalytic test on cis-decalin

Example 6 is repeated with the same conversion, i.e. under such conditions as to have a conversion for all the catalysts of 85%.

The tests are carried out at a total pressure of 5.2 MPa and a partial pressure of cis-decalin at the inlet of the reactor which varies from 20 to 25 kPa, corresponding to a temperature of the saturator ranging from 130 to 135°C. The LHSV ranges from 0.5 to 0.8 hours⁻¹.

The temperature at which each catalytic composition of the example is used, is indicated in Table 2 below.

The hydroconversion results of the cis-decalin charge are indicated in Table 2 below, in which:
- T is the temperature, different for each catalyst, at which the conversion of 85% is reached.
- Sel. paraffins (%) is the selectivity to paraffins, expressed as a ratio between:
   - the difference in moles of paraffin at the outlet and inlet of the reactor, and
   - the difference in moles of decalin at the outlet and inlet of the reactor.
- Yield paraffins (%) is the yield to paraffins, corresponding to the product between Sel. paraffins (%) and Conv. decalin (%), divided by 100.

**Table 2**

| Example | Catalyst | T (°C) | Sel. | Yield |
|---|---|---|---|---|
| | | | Paraffins (%) | paraffins (%) |
| 5 | 0.5 Pt/ | 320 | 0 | 0 |
| | Na_{0.33}-H_{0.67}-Y | | | |
| 2 | 3.1Ir/ | 300 | 36.0 | 30.6 |
| | Na_{0.90}-H_{0.10}-Y | | | |
| 3 | 3.8Ir/ | 285 | 26.0 | 22.1 |
| | Na_{0.90}-H_{0.10}-Y | | | |
| 1 | 4.0Pt/ | 340 | 35.0 | 29.8 |
| | Na_{0.88}-H_{0.12}-Y | | | |
| 4 | 0.9Ir/ | 335 | 32.0 | 27.2 |
| | Na_{0.41}-La_{0.16}-H_{0.11}-X | | | |

From the results indicated in Table 2, it is evident that, with the same conversion, the catalysts according to the present invention provide higher results in terms of selectivity and yield, with respect to the production of paraffins, i.e. with respect to the aspect which mainly influences the cetane number of the gas oil cuts.

### Example 8 - catalytic test on hydrotreated light cycle oil (HLCO)

The test was carried out in a continuous laboratory plant consisting of a fixed bed tubular reactor with a useful feedstock volume of 20 cm³ corresponding to a height of the catalytic bed in the isotherm section of 10 cm. The feeding of the feedstock, contained in a tank, and hydrogen to the reactor are effected by means of a dosage pump and mass flow meter, respectively. The system is also provided with two gas lines (air and nitrogen) which are used in the regeneration phase of the catalyst. The reactor is run in co-current downflow mode. The temperature of the reactor is regulated by means of an oven with two heating elements whereas the temperature control of the catalytic bed is effected by means of a thermocouple positioned inside the reactor. The pressure of the reactor is regulated by means of a valve situated downstream of the reactor. The reaction products are collected in a separator which operates at room temperature and atmospheric pressure. The products leaving the separator pass into a condenser cooled to 5°C, they are then sent to a gas meter and subsequently to a blowdown. The distribution of the products and conversion level are determined by means of a mass balance and gaschromatographic analysis of the reaction products.

The catalyst used is that prepared in Example 1 (4.0Pt/Na_{0.88},H_{0.12}-Y). The catalyst is inserted in the reactor in its oxidized form; its reduction is effected in the same reactor in the following way:
1) 1 hour at room temperature in a nitrogen flow;
2) heating from room temperature to 300°C with an increase of 1.5°C/min in a nitrogen flow;
3) the temperature is kept constant at 300°C for 30 minutes in nitrogen, for the subsequent 4 hours in a hydrogen flow, and is then brought to the test temperature.

The test is carried out on an HLCO cut, i.e. a hydrotreated and dearomatized LCO cut, having the characteristics indicated in Table 3:

**Table 3**

| | Dearomatized HLCO |
|---|---|
| Density (g/cm³) | 0.8370 |
| Nitrogen (ppm) | 0.85 |
| Sulfur (ppm) | 0.48 |
| Cetane number (CN) | 46 |
| Calculated cetane index (CCI 4v) | 41.4 |
| Aromatics HPLC EN12916-00 | |
| Total aromatics (wt.-%) | 0.5 |
| Mono- (wt.-%) | 0.4 |
| Poly-. (wt.-%) | 0.1 |
| Di- (wt%) | 0.1 |
| Tri- (wt%) | 0.0 |
| Analysis of saturated components; by Mass spectroscopy ASTM D2786-91 | |
| Paraffins (vol.-%) | 20.9 |
| Naphthenes with 1 ring (vol.-%) | 13.4 |
| Naphthenes with 2 rings (vol.-%) | 40.4 |
| Naphthenes with 3 rings (vol.-%) | 22.9 |
| Naphthenes with 4 rings (vol.-%) | 2.6 |
| Distillation curve | |
| ASTM D86-05 | |
| Initial boiling point (I.B.P.,°C) | 166.5 |
| 10% (°C) | 193.0 |
| 50% (°C) | 225.0 |
| 90% (°C) | 285.0 |
| 95% (°C) | 324.0 |
| Final boiling point (F.B.P., °C) | 334.0 |

The operative conditions used for the treatment test of the LCO cut are:
T which varies from 290 to 355 °C
P= 7 MPa
H₂/HLCO: 2330 Nl/kg
WHSV=1 hours⁻¹

The results obtained from the treatment of the hydrotreated and dearomatized HLCO feedstock of Table 3, in the presence of the catalyst of Example 1, according to the invention, are indicated in the following Tables 4 and 5, in which:
- The yield to gas oil is the percentage of the products with a boiling point higher than 180°C (gas oil fraction), determined by simulated distillation SIMDIST 2887;
- CCI is the Cetane Index 4V i.e. the cetane index of the gas oil fraction of the products, calculated, on the basis of the formula of the 4 variables, from the data of the distillate D86 and density at 15°C, measured on the same gas oil fraction, as described in ASTM D4737 - 96a.

The first line of Tables 4 and 5 indicate the characteristics of the HLCO fed (FEED).

The data indicated in Table 4 show that the use of the catalyst of Example 1, according to the invention, leads to a consistent increase in the cetane index, up to 13.3 unites, against a yield to gas oil higher than 70%. Following the treatment according to the process of the present invention, the density undergoes a marked reduction (even of 6.4%), again for yields higher than 70%.

**Table 4**

| | | | | |
|---|---|---|---|---|
| | | | Density 15°C (g/cm³) | CCI 4V |
| FEED | | | 0.8370 | 41.4 |
| | | | | |

| T(°C) | Tos (hours) | Yield Gas oil (%) | Density 15°C (g/cm³) | CCI 4V |
|---|---|---|---|---|
| 290 | 93 | 98.2 | 0.8335 | 42.5 |
| 300 | 165 | 97.5 | 0.8317 | 42.9 |
| 310 | 189 | 96.2 | 0.8287 | 43.3 |
| 320 | 213 | 94.7 | 0.8237 | 45.0 |
| 330 | 237 | 92.3 | 0.8146 | 46.8 |
| 340 | 261 | 87.3 | 0.8040 | 49.2 |
| 350 | 332 | 78.9 | 0.7900 | 52.8 |
| 355 | 381 | 74.6 | 0.7837 | 54.7 |

Table 5 below indicates, for the same products obtained in Table 4, the percentage of paraffins and multi-ring naphthenes (condensed naphthenes):

**Table 5**

| | | | Paraffins (vol.-%) | Condensed Naphthenes (vol.%) |
|---|---|---|---|---|
| FEED | | | 20.9 | 65.9 |
| | | | | |

| T (°C) | Tos (hours) | Yield gas oil (%) | Paraffins (vol.%) | Condensed Naphthenes (vol.%) |
|---|---|---|---|---|
| 290 | 93 | 98.2 | 24.7 | 67.3 |
| 300 | 165 | 97.5 | 24.7 | 66.4 |
| 310 | 189 | 96.2 | 25.2 | 65.4 |
| 320 | 213 | 94.7 | 26.3 | 58.2 |
| 330 | 237 | 92.3 | 29.1 | 46.8 |
| 340 | 261 | 87.3 | 32.7 | 34.2 |
| 350 | 332 | 78.9 | 41.1 | 21.9 |
| 355 | 381 | 74.6 | 44.5 | 17.1 |

The above data show the increase in the paraffin content with an increase in the temperature: said increase is such that the paraffins become the major component of the mixture resulting from the process maintaining a yield to gas oil higher than 70%.

### Example 9 - catalytic test on hydrotreated light cycle oil (HLCO)

Example 8 is repeated using, as catalyst, the catalysts of Examples 1 and 2, according to the invention. The catalysts are reduced in the same reaction reactor. The results, with the same yield to gas oil (180°+ fraction) are indicated in the following Table 6. The yield to gas oil is 90% and was obtained for the catalyst of Example 1 at a temperature of 335°C, and for the catalyst of Example 2 at a temperature of 350°C.

The feed is the same as Table 3 of Example 8, and the first line of Table 6 indicates the characteristics of the LCO fed (FEED). The content of condensed naphthenes in the feed is 65.9% by volume.

**Table 6**

| Ex. | Catalyst | Paraffins (vol.-%) | 1-R-Naphthenes (vol.-%) | Conversion condensed naphthenes (%) | CCl | T95 (°C) |
|---|---|---|---|---|---|---|
| | FEED | 20.9 | 13.4 | - | 41.4 | 324 |
| | | | | | | |
| 2 | 3.1Ir/ | 28.8 | 28.4 | 35.1 | 45.9 | 302.4 |
| | Na_{0.90}-H₀.₁₀-Y | | | | | |
| 1 | 4.0Pt/ | 28.5 | 23.7 | 29.3 | 45.7 | 315.2 |
| | Na_{0.88-}H_{0.12}-Y | | | | | |

It is evident that the catalysts according to the invention, evaluated with the same yield to gas oil, provide high increases in both paraffins and naphthenes with only one ring. Consequently, a conversion of naphthenes with two rings or more rings is obtained together with a significant increase in the cetane index (CCI 4V).

### Example 10 - catalytic test on hydrotreated Light Cycle Oil (HLCO)

Example 9 is repeated using, as catalyst that of Example 1, according to the invention. The content of condensed naphthenes in the feed is 65.9% by volume.

The results are indicated in Table 7. The yield to gas oil relating to the data indicated in the table is 80% and was obtained at a temperature of 348°C.

**Table 7**

| Ex. | Catalyst | Paraffins (vol.-%) | 1-R-Naphthenes (vol.-%) | Conversion condensed naphthenes (%) | CCl | T95 (°C) |
|---|---|---|---|---|---|---|
| | FEED | 20,9 | 13,4 | -- | 41,4 | 324 |
| | | | | | | |
| 1 | 4.0Pt/ | 41.1 | 37.0 | 66.8 | 52.8 | 297.7 |
| | Na_{0.88}-H_{0.12}-Y | | | | | |

It is evident that the catalyst according to the invention allows a significant increase to be obtained in both paraffins and naphthenes with only one ring. Consequently, a high conversion of naphthenes with two rings or more rings is obtained together with a significant increase in the cetane index (CCI 4V).

## Claims

1. A process for enhancing the fuel properties of hydrotreated, and possibly dearomatized, hydrocarbon blends, by the reaction of said blends with hydrogen, in the presence of a catalytic composition comprising:
- one or more metals T selected from Pt, Pd, Ir and Rh,
- a zeolite of the FAU type, having a crystalline lattice composed of silica and alumina, wherein the negative charges present in the crystalline lattice are neutralized by one or more cations of metals Me selected from alkaline, earth alkaline metals and lanthanoids, and by x moles of hydrogen ions per mole of aluminium, wherein x ranges from 0.04 to 0.4.

2. The process according to claim 1, wherein in the crystalline lattice of the FAU zeolite, the Si/Al molar ratio ranges from 1 to 10.

3. The process according to claim 1, wherein the catalytic composition comprises:
- one or more metals T selected from Pt, Pd, Ir and Rh,
- a FAU-type zeolite having a crystalline lattice composed of silica and alumina, with a Si/Al molar ratio ranging from 1 to 10, the negative charges present in the crystalline lattice being neutralized by x moles of hydrogen ions per mole of aluminium, wherein x ranges from 0.04 to 0.40, and by one or more cations of metals Me selected from alkaline, earth alkaline metals and lanthanoids, wherein the sum of the products of the moles of each metal cation Me multiplied by the valence of said metal cation is equal to (1-x) .

4. The process according to claim 1 or 3, wherein the catalytic composition comprises:
- one or more metals T selected from Pt, Pd, Ir and Rh,
- a FAU-type zeolite having the molar formula (A):
**(1-x)/n Me . x H. AlO₂. y SiO₂** **(A)**
wherein Me is a cation of a metal selected from alkaline, earth alkaline metals and lanthanoids,
H is a hydrogen ion,
y ranges from 1 to 10,
x corresponds to the moles of hydrogen ion and ranges from 0.04 to 0.4,
n is the valence of the cation Me.

5. The process according to one or more of the previous claims, wherein in the crystalline lattice of the FAU zeolite, the Si/Al molar ratio ranges from 1 to 3.

6. The process according to claim 1, 3 or 4, wherein the metal Me is selected from Li, Na, K, Mg, Ca, Sr, Ba, La and mixtures thereof.

7. The process according to claim 1, 3 or 4, wherein the FAU-type zeolite is selected from zeolite X and zeolite Y.

8. The process according to claim 1, wherein the metal T is in a quantity, expressed as metal element, ranging from 0.7 to 5% by weight with respect to the weight of the catalytic composition.

9. The process according to claim 1, wherein the hydrotreated hydrocarbon blends are blends having boiling points ranging from 150 to 450°C.

10. The process according to claim 1 or 9, wherein the hydrotreated hydrocarbon blends are hydrocarbon cuts obtained by the hydrotreatment of
- oil cuts such as Gas oil from thermal cracking (TCGO), gas oil from visbreaking (VISGO), gas oil from coking (COGO), or mixtures thereof, jet fuel, light cycle oil (LCO), heavy vacuum gas oil (HVGO), the cut 420⁻ heavy cycle oil (HCO), bituminous shale or bituminous sands or liquids deriving from coal,
- cuts of a petrochemical origin, such as, for example, FOK (fuel oil cracking).

11. The process according to claim 1 carried out at a temperature ranging from 240 to 380°C and at a pressure ranging from 3 to 10 MPa.

12. The process according to one or more of the previous claims, wherein the improvement in the fuel properties comprises an increase in the cetane index, a decrease in the density and a decrease in the T₉₅ of the hydrotreated hydrocarbon blends.

13. A catalytic composition comprising:
- one or more metals T selected from Pt, Pd, Ir and Rh
- a FAU-type zeolite having a crystalline lattice composed of silica and alumina, wherein the negative charges present on the crystalline lattice are neutralized by one or more cations of metals Me selected from alkaline, earth alkaline metals, lanthanoids, and by x moles of hydrogen ions per mole of aluminium, wherein x ranges from 0.04 to 0.4.

14. The catalytic composition according to claim 13 comprising:
- one or more metals T selected from Pt, Pd, Ir and Rh,
- a FAU-type zeolite having a crystalline lattice composed of silica and alumina, with a Si/Al molar ratio ranging from 1 to 10, the negative charges present in the crystalline lattice being neutralized by x moles of hydrogen ions per mole of aluminium, wherein x ranges from 0.04 to 0.40, and by one or more cations of metals Me selected from alkaline, earth alkaline metals and lanthanoids, wherein the sum of the products of the moles of each metal cation Me multiplied by the valence of said metal cation is equal to (1-x) .

15. The catalytic composition according to claim 13 or 14, comprising:
- one or more metals T selected from Pt, Pd, Ir and Rh,
- a FAU-type zeolite having the molar formula (A):
**(1-x)/n Me. x H. AlO₂. y SiO₂** **(A)**
wherein Me is a cation of a metal selected from alkaline, earth alkaline metals and lanthanides,
H is a hydrogen ion,
y ranges from 1 to 10,
x corresponds to the moles of hydrogen ion per mole of aluminium and ranges from 0.04 to 0.4,
n is the valence of the cation Me.

16. The composition according to claim 19, 20 or 21, wherein the metal Me is selected from Li, Na, K, Mg, Ca, Sr, Ba, La and mixtures thereof.

17. The composition according to claim 13, 14 or 15, wherein the FAU-type zeolite is selected from zeolite X and zeolite Y.

18. The composition according to claim 13, wherein the metal T is in a quantity, expressed as metal element, ranging from 0.7 to 5% by weight with respect to the weight of the catalytic composition.

19. A catalytic composition comprising:
- one or more metals T selected from Pt, Pd, Ir and Rh in the form of oxides,
- a FAU-type zeolite having a crystalline lattice composed of silica and alumina, wherein the negative charges present on the crystalline lattice are neutralized by one or more cations of metals Me selected from alkaline, earth alkaline metals, lanthanoids, and possibly by H ions in a quantity lower than 0.4 moles per mole of aluminium.

20. A process for preparing the catalytic compositions according to claim 13, comprising:
- subjecting a FAU-type zeolite having a crystalline lattice composed of silica and alumina, wherein the negative charges present on the crystalline lattice are neutralized by one or more cations of metals Me selected from alkaline, earth alkaline metals, lanthanoids, and possibly NH₄ ions, to impregnation or ion exchange with one or more compounds of one or more metals T selected from Pt, Pd, Ir and Rh,
- calcining the product thus obtained,
- subjecting the resulting product to reduction in a reducing atmosphere at a temperature ranging from 300 to 450°C.

21. The process for preparing the catalytic compositions according to claim 19, comprising:
- subjecting a FAU-type zeolite having a crystalline lattice composed of silica and alumina, wherein the negative charges present on the crystalline lattice are neutralized by one or more cations of metals Me selected from alkaline, earth alkaline metals, lanthanoids, and possibly NH₄ ions, to impregnation or ion exchange with one or more compounds of one or more metals T selected from Pt, Pd, Ir and Rh,
- subjecting the product thus obtained to calcination.
